# EUROPEAN PATENT APPLICATION

(11) **EP 2 581 584 A1**
(43) Date of publication of application: **17.04.2013**
(21) Application number: 12188005.8
(22) Date of filing: 10.10.2012
(51) Int. Cl.: F02C 6/16, F02C 7/143

(54) **Compressed air energy storage system and method for operating this system**

(30) Priority: 13.10.2011 GB 201117654
(71) Applicant: Alstom Technology Ltd, 5400 Baden (CH)
(72) Inventor: Bove, Roberto, 8050 Zürich (CH); Guidati, Gianfranco, 8048 Zürich (CH); Ferretti, Fabio, 8048 Zürich (CH); Wirsum, Manfred, 79618 Rheinfelden (DE)

(57) **Abstract**

An adiabatic compressed air energy storage (ACAES) system (20), comprising at least two compressors (1, 4) operable to compress air (A), at least one thermal energy storage unit (TES, 2) operable to extract thermal energy from the air after compression, and a storage vessel (cavern, 6) for storing the compressed air after it has passed through the TES (2), either the first or the second one of the compressors (1, 4) being a. gas turbine derivative compressor. Upon discharge from the storage vessel (6), the compressed air is passed through the TES (2) in the reverse direction and the heated compressed air is then used to drive an air turbine (8) coupled to an electrical generator (16).

## Description

### Technical Field

The present disclosure relates generally to the field of Compressed Air Energy Storage (CAES) systems. Particularly, though not exclusively, the present disclosure relates to adiabatic CAES (ACAES) systems.

### Background

It is desireable during periods of low electricity demand to store energy generated from renewable energy sources (e.g., wind, wave and solar) in some manner such that reserves of stored energy are available to offset the variability and/or to augment the output of such sources during periods of high electricity demand. Particularly in the context of electricity production for utility grids, which must meet the requirements of peaks in demand for electricity on a daily cycle, the natural variability of renewable energy sources puts them at a disadvantage unless the energy they produce can be efficiently stored.

CAES systems are a known means of providing such energy storage. They operate on the principle of using the energy that is to be stored to compress a volume of air, the pressurized air being stored in a large pressure-tight chamber, such as a suitably modified underground cavern. At a later time, as and when extra electricity production is demanded, some or all of the compressed air is released through a turbine linked to an electrical generator. In this way, CAES systems are used to decouple in time the air compression phase from the electricity generating expansion phase. Hence, compression and storage ("charging") occurs when, for example, electric motors are used to power the compressor(s) during times when there is excess electricity, while expansion of the stored air through a turbine to generate electricity ("discharging") occurs when there is a high electricity demand. For prior art examples of CAES systems, see, e.g., US Patents Nos. 4,100,745; 3,895,493; 3,988,897.

Two forms of CAES are currently known: diabatic, and adiabatic. Diabatic CAES (DCAES) involves the employment of a fuel, such as natural gas, to mix and combust with the compressed air to run the turbine at higher efficiencies. Adiabatic CAES (ACAES) systems, on the other hand, require less or no fuel to augment their electricity production, because they store the heat, created as a result of the compression of the air, in separate Thermal Energy Storage (TES) units. This heat is then later used to raise the temperature of the stored compressed air before it is passed through the turbine, to run the turbine at higher levels of efficiency. See, for example, US Patents Nos. 3,677,088 and 4,147,204.

Adiabatic compression in an ACAES system heats the air to a high temperature, and one or more TES units can be use to cool this compressed air before it is stored in the cavern by transferring and storing its thermal energy. An adiabatic compression of a given volume of air from 1 to 100 bar, for example, would heat that air from 25°C to about 837°C. However, compressors capable of withstanding such a high outlet temperature have not hitherto been commercially available. Therefore, using commercially available compressors, the compression is performed using multistage intercooled axial and radial compressors in series (the axial compressor usually being first in the series) to reduce the maximum discharge temperature at any given stage. This arrangement leads to drawbacks such as: increased capital cost due to the presence of heat exchangers and additional TES units; increased pressure losses due to multistage compression and expansion; increased system complexity; and, limited energy density of the system due to limited rated power.

Attempts to mitigate these disadvantages through better integration of axial and radial compressors have been reported in the past (e.g. Patent Number US 3,831,373 or Bullough C. et al., 2004, proceedings of the European Wind Energy Conference EWEC 2004). However, these attempts suffer from a problem that, as the pressure in the cavern increases, the axial compressor thereof is forced to work against a varying pressure ratio, while the radial compressor operates at nearly constant pressure ratio. This situation is unsuitable for Adiabatic CAES systems (i.e., when the thermal energy added by each compressor is stored for use in the discharging phase) because in such instances it is desirable that the temperature of the air leaving the compressors is as high as possible. This temperature is proportional to the pressure ratio of the compressor, and it is, therefore, desireable that the pressure ratio in each compressor be both as constant, and as high, as possible to result in the advantageously high exhaust temperatures.

Furthermore, at high pressure and low temperature after cooling, humidity in the air is likely to condense in the or each TES unit, depending on ambient conditions. It is therefore desirable for such condensation to be controllable in high pressure ACAES systems, independently of ambient conditions.

### Summary of the Disclosure

A first aspect of the disclosure includes providing a compressed air storage (CAES) system comprising at least a first and a second stages of compression for compressing the air, the second stage being downstream of the first stage of compression, and a storage vessel for storing the compressed air, the compressed air storage system (CAES) further comprising a control system for:
defining the operating condition of the first compression stage and operating the first compression stage at these operating conditions,
regulating the operating condition of the second compressor stage.

In different refinements (each applicable together or independently of the others):
the system has at least one of the compression stages comprises a gas turbine derivative compressor (GT-derivative compressor),
the system comprises at least one thermal energy storage unit (TES) operable to extract thermal energy from the air after compression, the storage vessel for storing the compressed air after it has passed through the TES,
the GT-derivative compressor is operable to perform a first stage of at least two stages of compression, and at least one non-GT-derivative compressor is operable to perform at least one subsequent stage of compression,
the GT-derivative compressor is operable to perform a second stage of two or more stages of compression, and at least one non-GT-derivative compressor is operable to perform at least the first stage of compression,
the GT-derivative compressor having a pressure ratio of between 30 and 40; and a discharge temperature of between 500 and 650°C,
the system has variable inlet guide vanes in at least the GT-derivative compressor and a temperature controlling device at the inlet to the gas turbine derivative compressor, the inlet guide vanes and temperature controlling device being operable to maintain a flow of compressed air from an outlet of the gas turbine derivative compressor at a substantially constant temperature between 500 and 650°C,
the system has variable inlet guide vanes in at least the second compressor stage and a temperature controlling device at the inlet to the second compressor stage, the inlet guide vanes and temperature controlling device being operable to maintain a flow of compressed air from an outlet of the second compressor stage at a substantially constant temperature between 500 and 650°C,
the system has means for removing water content from the air prior to compression,
the means for removing water content from the air comprises a desiccant wheel or a stationary desiccant reactor,
the system has at least an intercooler located subsequent to a compressor and operable to extract thermal energy from the compressed air, use it to heat ambient air, and pass the heated air to the desiccant wheel or stationary desiccant reactor to regenerate desiccant contained therein,
the system has at least a chiller for cooling the air prior to compression.

Another aspect of the disclosure includes providing a method for operating a compressed air storage (CAES) system, the compressed air energy storage (CAES) system, comprising at least a first and a second stages of compression for compressing the air, the second stage being downstream of the first stage of compression, and a storage vessel for storing the compressed air, the method comprising:
defining the operating condition of the first compression stage and operating the first compression stage at these operating conditions,
regulating the operating condition of the second compressor stage.

In different refinements of the method:
includes the steps of:
   regulating the operating conditions of the second compression stage includes at least one among:
   regulating the inlet guide vane of the second compression stage,
   regulating the temperature at the inlet of the second compression stage,
   regulating the speed of the second compression stage,
the inlet guide vanes of the first compressor stage are adjusted to maintain or adjust the operating conditions of the first compression stage.

As used herein, the term "air" should be understood to include not only normal atmospheric air, but also volumes of gas comprised mainly or completely of vitiated air, or one or more of the normal constituents of atmospheric air, such as nitrogen and carbon dioxide.

Advantageously, the use of a GT-derivative compressor enables an increase in energy efficiency of the system, because such compressors can operate at high pressure and temperature ratios. A GT-derivative compressor is, for example, a robust axial compressor derived from the compressor of a heavyweight gas turbine engine of the type used in power stations, e.g., the ALSTOM GT26, and therefore having long-term operational capabilities at high temperatures and pressures.

Of course, from a theoretical standpoint, and disregarding limitations of the materials used in construction, all compressors can be designed to give high output pressures and temperatures. However, in reality, compressors of the type used in axial flow gas turbine engines (GT-derivative compressors) - particularly the type of axial flow compressors used in heavyeight gas turbines - out-perform the types of compressor (mainly centrifugal compressors) hitherto used in CAES systems in the matters of pressure ratio and temperature capability. To match the pressure and temperature ratios achieved by GT-derivative compressors, as hereinbefore defined, other types of compressors would have to be completely redesigned and redeveloped. For example, centrifugal compressors are not capable of such high pressure ratios as GT-derivative compressors, due to stress considerations which limit mechnical integrity and working life.

Further aspects of the present concept will be apparent from the following description.

### Brief Description of the Drawings

A detailed description of preferred embodiments follows below, with reference to the accompanying Drawings, in which:
Figures 1 to 5 are schematic views of preferred embodiments of ACAES systems, and
Figure 6 shows the implementation of the method with compressors implementing the compression stages.

### Detailed Description of Preferred Embodiments

Detailed descriptions of specific preferred embodiments of an ACAES system are disclosed herein. It will be understood that the disclosed embodiments are merely examples of the way in which certain aspects of the invention can be implemented and do not represent an exhaustive list of all possible embodiments. Indeed, it will be understood that the various embodiments of the ACAES systems described herein may be embodied in various and alternative forms. The figures are schematic, and well-known components, materials or methods are not necessarily described in great detail in order to avoid drawing attention away from the innovative content. Any specific structural and functional details disclosed herein are not to be interpreted as limiting, but merely as a basis for the claims and as a representative basis for teaching one skilled in the art to variously employ the present concept.

In an ACAES system according to a first preferred embodiment, a Gas Turbine (GT)-derivative axial compressor with inlet guide vanes (IGVs) is used as a compression stage before a TES to replace one or two stages of commercially available radial compressors, while operating the system according to a particular strategy disclosed below. GT-derivative axial compressors are constructed in a manner that is compatible with advantageously high exhaust temperatures. For this reason, the use of such compressors leads to an advantageous result of providing increased thermal energy for storage and subsequent re-use, and also in greater compression efficiency.

Relative to the type of radial compressors previously used in CAES systems, the increased pressure ratio and discharge temperature of the GT-derivative axial compressor achieves the desired cavern pressure (e.g. 150 bar or higher) with fewer compression stages, so saving capital costs and decreasing the complexity of the system. Furthermore, there are decreased pressure losses due to the reduced number of stages, increased efficiency due to higher average temperatures of the thermodynamic cycle, and increased energy density of the system, because during the discharge phase, turbines can expand the discharged and reheated air from higher temperatures and hence produce more power.

Because a higher compressor outlet temperature can be maintained for the entire charging cycle, the output energy is maximized during the discharge phase thus facilitating stable and efficient flow of thermal energy to the TES. Additionally, as detailed below, operating a GT-derivative axial compressor at a nearly constant outlet temperature is more efficient because it allows a nominal operating point of maximum efficiency to be more closely matched.

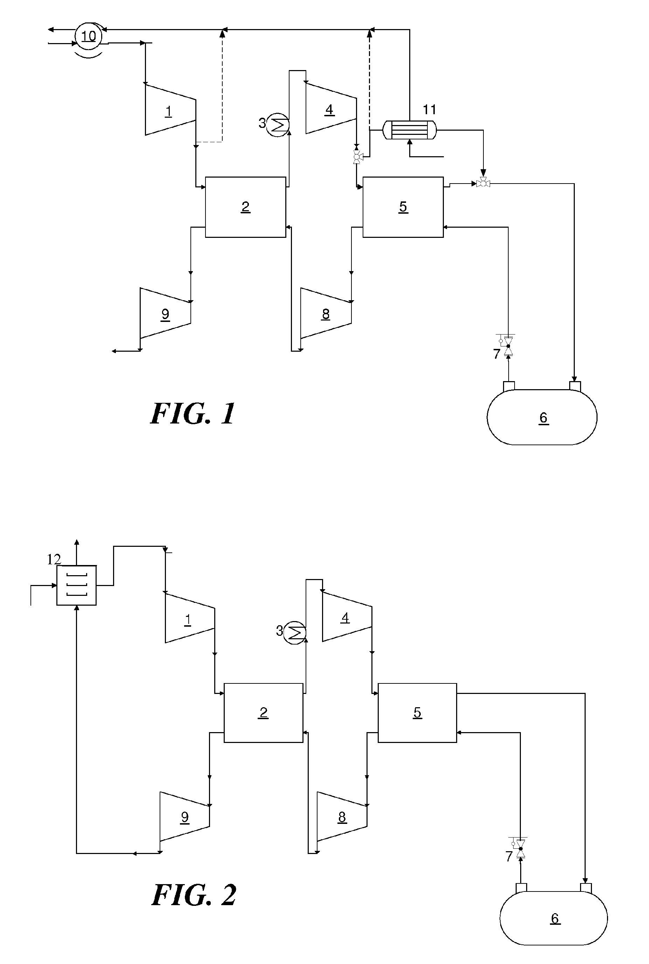

With reference to Figure 1, the ACAES system 20 comprises a first compressor 1, being the GT-derivative compressor, which compresses ambient air A from atmospheric pressure up to approximately 33 bar and approximately 550°C. This hot air enters a Medium Pressure (MP) TES 2, which extracts and stores thermal energy from the flow of air. Note that the temperature of the air at the first compressor 1 outlet should preferably be kept as high as possible to heat up the MP TES 2 so that during discharge, an inlet temperature of an MP turbine 9 (described below) is also maximized. Furthermore, it is advantageous to maintain the pressure ratios of the first compressor 1 and the second compressor 4 at substantially constant levels during the entire charging phase, and this can be achieved by a control strategy comprising:
(a) selectively adjusting the temperature (through cooling and/or heating) of the compressed air before it enters the second compressor 4, using an air temperature adjusting device 3, installed between the MP TES 2 and a second compressor 4; and
(b) selectively adjusting the orientations of the IGVs of the first compressor 1 and the second compressor 4;
these adjustments being made according to the status of the cavern pressure and ambient air conditions.

The second compressor 4 is a type of commercially available compressor already known for use in CAES systems, e.g., a radial compressor, which compresses the air to the desired pressure (e.g., upwards of 60 bars) ready for storage in a compressed air holding vessel such as a cavern 6 in a rock salt deposit. Before flowing into the cavern 6 through a valve 12, the highly compressed air passes through a High Pressure (HP) TES 5, which extracts as large a proportion as possible of the thermal energy thereof, thereby cooling it. Hence, in the described ACAES system, energy is stored in the form of potential energy of the pressurized air in the reservoir 6 and thermal energy in the MP TES 2 and HP TES 5.

When it is required to generate electricity, pressurized air is released from the reservoir 6 by opening a valve 7 in an outlet port of the cavern 6 and ducting the air to the HP TES 5. Stored thermal energy is transferred from the HP TES 5 to the relatively cool pressurised air from the cavern 6, thereby raising its temperature. The heated air is then expanded through an HP turbine 8, which is mechanically coupled to a generator (not shown) to generate electricity. Expansion through HP turbine 8 reduces its pressure and temperature, so the air is then passed to the MP TES 2, where thermal energy is transferred to the air to increase its temperature prior to its expansion through an MP turbine 9. The MP turbine is coupled to an electrical generator (not shown), e.g., the same generator to which the HP turbine 8 is coupled, or alternatively the shaft torque developed by the MP turbine may be used to do some other useful work.

Optionally, it is envisaged that the valve 7 may be a pressure reducer for greater control of the exit pressure from the cavern 6. Typically, the pressure in the cavern 6 is maintained between 60 and 80 bars, although it is contemplated that pressures up to 200 bar are feasible, which would lead to advantageous gains in energy density due to the increased potential energy of the compressed air.

It is further envisaged that the ACAES system 20 comprises a water-absorbing agent housed in a desiccant wheel 10 or other desiccant storage device at the inlet to the first compressor 1, to absorb moisture from a flow of air passing through it into the system, the absorbing agent being regenerated during the charging or discharging phases of operation of the system 20. The use of the water-absorbing agent enables the amount of water introduced into the system 20 to be controlled, thus reducing or eliminating water condensation within the MP TES 2 or the HP TES 5, or inside the cavern 6. Optionally, regeneration of the desiccant may be performed by means of bleeding off some hot air, available at the outlets of the first compressor 1 or the second compressor 4, and passing it to the desiccant wheel via bleed ducts B1 and B2, shown as dashed lines. Alternatively, or additionally, hot air from one or both of the first compressor 1 and second compressor 4 can be used to heat ambient air indirectly through a heat exchanger. In Figure 1, this is illustrated in connection with compressor 4, where a minor proportion of its output of hot compressed air is passed though an intercooler heat exchanger 11 and used to heat ambient air A, which is then passed to the desiccant wheel. In either case, the hot air is directed through the desiccant wheel 10 in the opposite direction and on the opposite side to the incoming air for compression. Slow rotation of the desiccant wheel continually exposes newly regenerated desiccant to incoming moist air while simultaneously exposing moisture-laden desiccant to hot air for regeneration.

Additionally, it may also be advantageous to pass the incoming air through a chiller (not shown) before it passes through the desiccant, thereby reducing the air temperature at the inlet of the first compressor 1. Such chilling of the air encourages condensation of moisture before the air enters the system 20, thereby aiding the function of the desiccant. Furthermore, the skilled person will know that the pressure ratio of a compressor (i.e., the ratio of the outlet pressure to the inlet pressure) and its temperature ratio (i.e., the ratio of the outlet temperature to the inlet temperature) are directly linked via the relationship PR=c*TR^(a), where PR is pressure ratio, TR is temperature ratio, and a and c are two constants. Hence, for a fixed outlet temperature (which is limited by the temperature limitations of the materials constituting the compressor), if the inlet temperature is lowered, TR increases, and so does the pressure ratio. Hence, pre-cooling the input air flow to the first compressor provides a number of further advantages: the lower inlet temperature allows an increased pressure ratio to be created across the first compressor 1 whilst avoiding potentially damaging outlet temperatures; the increased pressure ratio leads to increased efficiency for the compression of the air, and also lowers the requirements for the second compressor 4, because it can have a smaller pressure ratio, i.e., the second compressor can have a cheaper construction, because it has to increase the pressure to a lesser extent.

A small proportion of the hot air (not shown) from the outlets of the first or second compressors 1, 4, can also be used to keep the MP 8 and HP 9 turbines warm during the charging of the system, thus reducing their start-up times when they are required.

Additional preferred embodiments will now be described. These additional embodiments share common features with the first preferred embodiment of Figure 1 as described above and this is reflected by the use of like reference numerals for similar components. Only the differences between the first preferred embodiment and these alternative embodiments are described below.

In another embodiment, shown in Figure 2, a stationary desiccant reactor 13 is employed instead of a desiccant wheel. In this case, the desiccant materials are regenerated only during the discharging phase, by using the hot air H discharged by the turbine 9. Alternatively, the hot air H may be passed through a heat exchanger (not shown) to heat ambient air, which is then flowed though the desiccant reactor 13.

In a further embodiment (not illustrated), the second compressor 4 is a GT-derivative compressor, while the first compressor 1 is a non-GT-derivative compressor. Otherwise, the working principles are the same as described for the first and second preferred embodiments above.

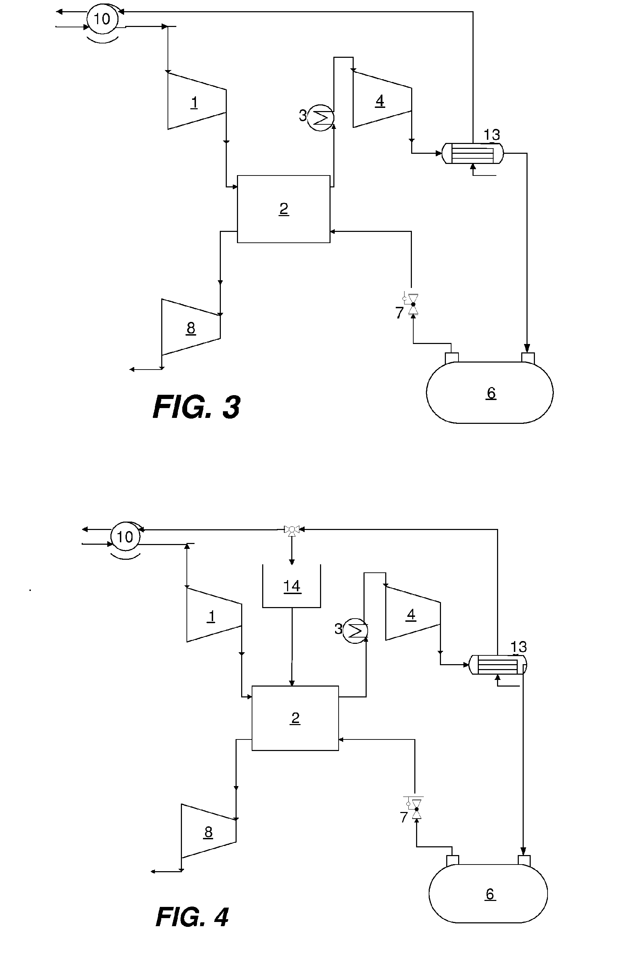

In yet another embodiment, illustrated in Figure 3, ambient air A enters the first compressor 1 during the charging phase and is compressed to approximately 33 bar and 550°C. This hot air enters then an HP TES 2, to which the thermal energy of the air is transferred, thereby cooling it. The air enters then the second compressor 4, by operation of which it is compressed to a maximum desired pressure. Between the HP TES 2 and the second compressor 4, an air temperature adjusting device 3 is provided for control purposes so as to achieve (as nearly as possible) constant and maximised outlet temperatures of the second compressor 4. An intercooler 11 is used to cool down the flow before it enters the cavern 6 rather than a second TES. Heat recovered in the intercooler 11 is used to heat further ambient air A for the continuous regeneration of the desiccant wheel 10. A chiller (not shown) can be used to precool the incoming ambient air A.

When electricity generation is needed, the pressurized air is released from the cavern 6 and enters the HP TES 2 to recover the thermal energy stored therein. With the resulting increased temperature the air can be expanded through the air turbine 8, which is mechanically coupled to an electrical generator.

A further embodiment is illustrated in Figure 4. This embodiment is a variation of Figure 3, wherein the intercooler 11 is coupled to a heat pump 14. Alternatively, the heat pump 14 may entirely replace the intercooler 13. The heat pump 14 is arranged such that a cold heat source thereof extracts the heat of compression of the compressed air from the second compressor 4 and releases it to the TES 2 at higher temperature.

It is contemplated that in these embodiments, hot air can be used to keep the air turbine 8 warm while the system is in charging mode.

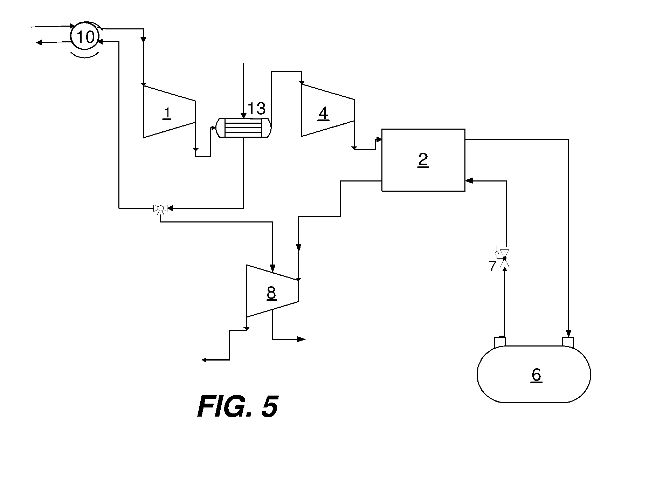

Another embodiment is shown in Figure 5, where during a charging phase, air A is cooled in chiller 15, passes through desiccant wheel 10, and enters a first, non GT-derivative compressor 1 having a relatively low pressure ratio in the range of, for example, 1 to 5. A second, GT-derivative compressor 4, with a relatively much higher pressure ratio, is also provided, and an intercooler 11 is employed to regulate the temperature of the compressed air flowing from the first compressor 1 to the inlet of the second compressor 4. The second compressor 4 compresses the air to the desired pressure of the reservoir 6, such as, for example, to between 60 and 80 bar. The compressed air passes from the second compressor 4 to the reservoir 6 *via* a TES 2, to which thermal energy is transferred to cool the air down to a suitable temperature for storage. The thermal energy extracted by the intercooler 11 is passed to ambient air A, part of which is employed for regenerating the desiccant in desiccant wheel 10, the remainder of the heated air being optionally employed as shown for keeping the air turbine 8 warm when it is not in operation.

In the discharging mode of operation, the pressurized air is released from the cavern 6 and enters the TES 2. Thermal energy is transferred from the TES to the pressurised air. With the resulting increased temperature, the air can be expanded through the air turbine 8, which is coupled to an electrical generator 16 to produce electricity. Optionally, depending on the maximum pressure in the reservoir, the rate of withdrawal of air can be controlled by a pressure reducer 7.

A further variation of this embodiment (not shown) consists of either replacing the intercooler 11 with a heat pump or combining a heat pump with the intercooler 13, as shown in Figure 4. This extracts the waste heat of compression using the cold heat source of the heat pump and transfers it to the TES 4 at a higher temperature.

Whilst the foregoing description has focused on the use of desiccated atmospheric air as a storage medium, it is envisaged that the present concept may be applied to the use of gases other than air as a storage medium. In particular, it is envisaged that gases such as nitrogen and carbon dioxide may be used with the present concept.

The various foregoing preferred embodiments of ACAES systems comprise differing features and it is envisaged that these features may be interchanged between the embodiments to arrive at further permutations within the scope of the above described concept as defined in the claims. The embodiments above are exemplary in nature and should not be considered in isolation from one another.

Although the above embodiments have been described with particular reference to the use of GT-derivative compressors in ACAES systems, it will be appreciated that such compressors could also be useful in CAES systems.

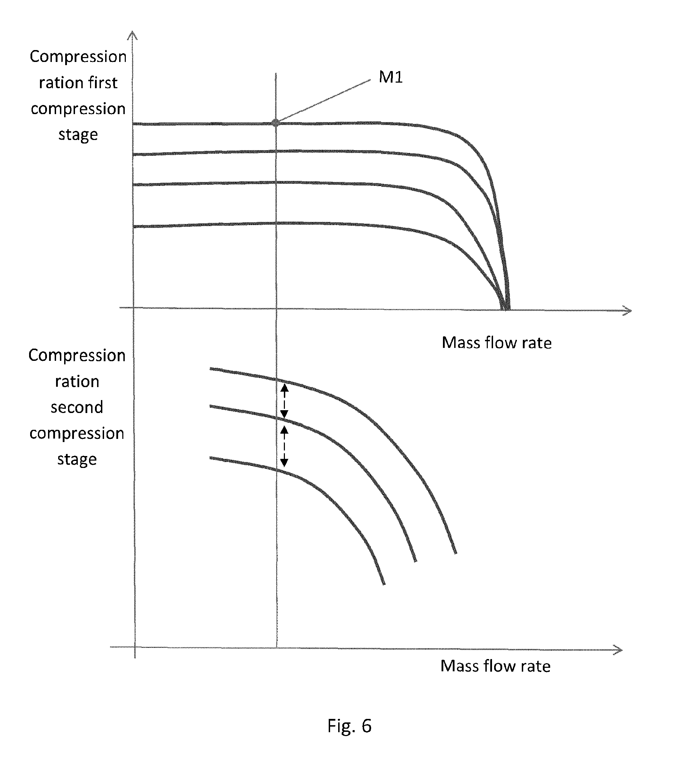

With reference to figure 6 a method for operating a compressed air storage (CAES) system is described.

The CAES is for example the one disclosed above and thus has a first and a second stages of compression for compressing the air, the second stage being downstream of the first stage of compression, and a storage vessel for storing the compressed air.

The method comprises:
defining the operating condition of the first compression stage and operating the first compression stage at these operating conditions,
regulating the operating condition of the second compressor stage.

In other words, the operating point M1 for the compressor of the first compressor stage is defined; the first compressor is for example an axial compressor but it can also be a different compressor. Preferably this compressor is a GT derivative compressor, but it could also be a different compressor.

Once the operating point M1 is defined, global regulation of the pressure ratio (i.e. pressure ration at the outlet of the second compression stage, or in other words compressor ratio through the first and second compressor stages) is achieved by regulating the second compression stage.

In particular, regulating the operating conditions of the second compression stage includes at least one among:
regulating the inlet guide vane of the second compression stage,
regulating the temperature at the inlet of the second compression stage,
regulating the speed of the second compression stage.

This regulation allows to shift among the curves of the second compressor stage. In figure 6 reference to a radial compressor is made, it is clear that any other type of compressor is possible.

Preferably, the inlet guide vanes of the first compressor stage are also adjusted, to maintain or adjust the operating conditions of the first compression stage.

## Claims

1. A compressed air storage (CAES) system comprising at least a first and a second stages of compression for compressing the air, the second stage being downstream of the first stage of compression, and a storage vessel for storing the compressed air, the compressed air storage system (CAES) further comprising a control system for:
defining the operating condition of the first compression stage and operating the first compression stage at these operating conditions,
regulating the operating condition of the second compressor stage.

2. The system of claim 1, **characterized in that** at least one of the compression stages comprises a gas turbine derivative compressor (GT-derivative compressor).

3. The system of claim 1, **characterized by** comprising at least one thermal energy storage unit (TES) operable to extract thermal energy from the air after compression, the storage vessel for storing the compressed air after it has passed through the TES.

4. The system of claim 2, **characterized in that** the GT-derivative compressor is operable to perform a first stage of at least two stages of compression, and at least one non-GT-derivative compressor is operable to perform at least one subsequent stage of compression.

5. The system of claim 2, wherein the GT-derivative compressor is operable to perform a second stage of two or more stages of compression, and at least one non-GT-derivative compressor is operable to perform at least the first stage of compression.

6. The system of any preceding claim, the GT-derivative compressor having a pressure ratio of between 30 and 40; and a discharge temperature of between 500 and 650°C.

7. The system of any preceding claim, further comprising variable inlet guide vanes in at least the GT-derivative compressor and a temperature controlling device at the inlet to the gas turbine derivative compressor, the inlet guide vanes and temperature controlling device being operable to maintain a flow of compressed air from an outlet of the gas turbine derivative compressor at a substantially constant temperature between 500 and 650°C.

8. The system of any preceding claim, further comprising variable inlet guide vanes in at least the second compressor stage and a temperature controlling device at the inlet to the second compressor stage, the inlet guide vanes and temperature controlling device being operable to maintain a flow of compressed air from an outlet of the second compressor stage at a substantially constant temperature between 500 and 650°C.

9. The system of any preceding claim, further comprising means for removing water content from the air prior to compression.

10. The system of claim 9, wherein the means for removing water content from the air comprises a desiccant wheel or a stationary desiccant reactor.

11. The system of claim 10, further comprising an intercooler located subsequent to a compressor and operable to extract thermal energy from the compressed air, use it to heat ambient air, and pass the heated air to the desiccant wheel or stationary desiccant reactor to regenerate desiccant contained therein.

12. The system of any preceding claim, further comprising a chiller for cooling the air prior to compression.

13. Method for operating a compressed air storage (CAES) system, the compressed air energy storage (CAES) system, comprising at least a first and a second stages of compression for compressing the air, the second stage being downstream of the first stage of compression, and a storage vessel for storing the compressed air, the method comprising:
defining the operating condition of the first compression stage and operating the first compression stage at these operating conditions,
regulating the operating condition of the second compressor stage.

14. Method according to claim 13, **characterized in that** regulating the operating conditions of the second compression stage includes at least one among:
regulating the inlet guide vane of the second compression stage,
regulating the temperature at the inlet of the second compression stage,
regulating the speed of the second compression stage.
Method according to claim 1, **characterized by** also adjusting the inlet guide vanes of the first compressor stage to maintain or adjust the operating conditions of the first compression stage.
